# EUROPEAN PATENT APPLICATION

(11) **EP 4 756 536 A1**
(43) Date of publication of application: **10.06.2026**
(21) Application number: 25208836.4
(22) Date of filing: 15.10.2025
(51) Int. Cl.: G03G 15/00, G03G 21/16

(54) **IMAGE FORMING APPARATUS**

(30) Priority: 05.12.2024 JP 2024212533
(71) Applicant: Canon Kabushiki Kaisha, Tokyo, 146-8501 (JP)
(72) Inventor: NADA, Takao, Ohta-ku, Tokyo, 146-8501 (JP); MITSUI, Yuji, Ohta-ku, Tokyo, 146-8501 (JP)
(74) Representative: TBK

(57) **Abstract**

An image forming apparatus includes a main assembly frame including a first frame and a second frame opposing the first frame, an image reader provided above the main assembly frame; an image processing board and a fan for cooling inside the image forming apparatus. A side of a space for accommodating a photosensitive drum to the first frame is an inside of the first frame and a side opposite to the side of the space to the first frame is an outside of the first frame. The image processing board is in the outside of the first frame. A part of the image processing board is above an upper end of the first frame and below a lower end of the image reader. At least a part of the fun is above the upper end of the first frame and below the lower end of the image reader.

## Description

### BACKGROUND

### Field of the Technology

The present disclosure relates to an image forming apparatus such as a copy machine and a printer.

### Description of the Related Art

In an image forming apparatus described in Japanese Patent Application Laid-Open No. 2013-109141, a board is disposed at an outside of a side plate which forms a main assembly frame.

### SUMMARY

In Japanese Patent Application Laid-Open No. 2013-109141, an example of a single-function printer is described, however, in a printer provided with an image reading device, a size of the board which processes data from the image reading device becomes large, which may cause a size of the image forming apparatus to be increased.

The present invention is conceived under such a background, and an object of the present invention is to downsize the image forming apparatus.

In order to solve the aforementioned problem, the present Embodiment includes the following configuration.

An image forming apparatus comprising: a photosensitive drum; a main assembly frame including a first frame and a second frame opposing the first frame, and configured to form a space for accommodating the photosensitive drum; an image reading unit provided above the main assembly frame; an image data processing board configured to process at least an image data read by the image reading unit; and a fan configured to cool inside the image forming apparatus, wherein a side of the space to the first frame is an inside of the first frame and a side opposite to the side of the space to the first frame is an outside of the first frame, wherein the image data processing board is positioned at the outside of the first frame, wherein a part of the image data processing board is above an upper end of the first frame and below a lower end of the image reading unit, and wherein at least a part of the fan is above the upper end of the first frame and below the lower end of the image reading unit.

Further features of the present invention will become apparent from the following description of exemplary embodiments with reference to the attached drawings. The following description of embodiments is described by way of example.

### BRIEF DESCRIPTION OF THE DRAWINGS

Figure 1 is an outline cross-sectional view illustrating an image forming apparatus in an Embodiment.
Figure 2 is a perspective view illustrating a frame configuration of the image forming apparatus in the Embodiment.
Figure 3 is an outline view illustrating a configuration of an electrical component portion on a left side of a printer main assembly in the Embodiment.
Figure 4 is a view illustrating a state in which a circuit board is mounted on the left side of the printer main assembly in the Embodiment.
Figure 5 is a view illustrating a state in which a drawer holder and a bundle wire guide in the Embodiment are mounted.
Figure 6 is a view illustrating a state in which a controller board, an image data processing board and first and second fans in the Embodiment are mounted.
Figure 7 is an outline cross-sectional view of a portion at which the second fan in the Embodiment is disposed as viewed in a direction of an arrow A in Figure 6.

### DESCRIPTION OF THE EMBODIMENTS

### [Embodiment]

### (Overall configuration of an image forming apparatus)

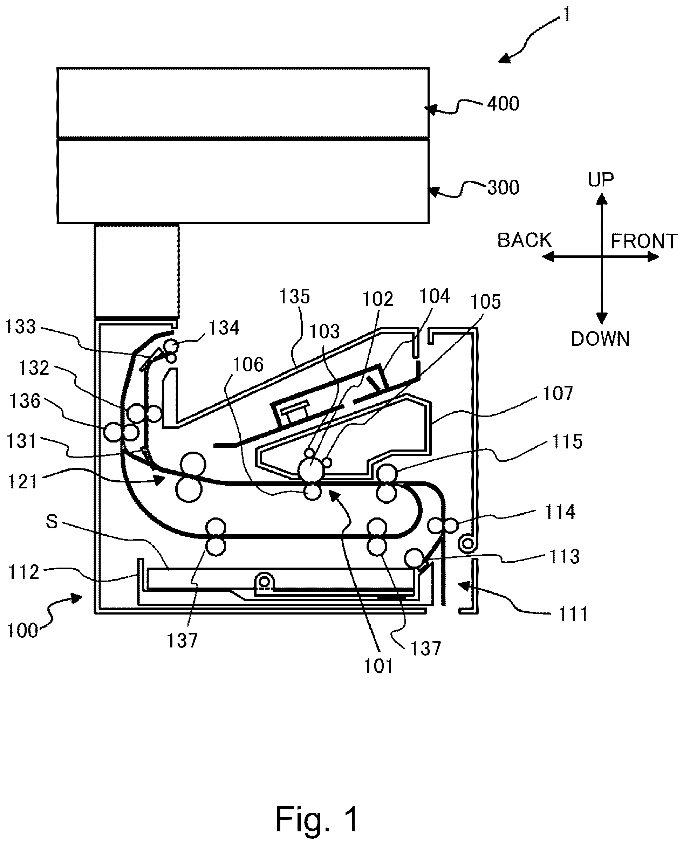

Figure 1 is a cross-sectional view illustrating an outline configuration of an image forming apparatus in the present Embodiment which performs an image formation on a sheet S. A vertical direction and a front and back direction are defined as shown in Figure 1. In Figure 1, a laser beam printer as an example of an image forming apparatus 1 is shown. Above a printer main assembly 100 of the image forming apparatus 1, an image reading device 300 (image reading unit) which performs reading of an original and an original conveying device 400 which automatically conveys the original to the image reading device 300 are mounted.

The printer main assembly 100 is provided with an electrophotographic photosensitive member having a drum shape (hereinafter, referred to as a photosensitive drum 102) as an image bearing member. The photosensitive drum 102 is a photosensitive member constituted by a photosensitive agent material such as OPC (organic photo conductor), amorphous selenium and amorphous silicon being provided on a base member having a cylinder shape formed of aluminum, nickel, etc. The photosensitive drum 102 is rotatably supported by the printer main assembly 100, and is rotationally driven at a predetermined process speed by a driving source. Around the photosensitive drum 102, in order along a rotational direction thereof, a charging member 103, a developing member 105 and a transfer roller 106 as a transfer member are disposed. In addition, at an upper portion of the photosensitive drum 102, a scanner unit 104 as an exposure device is disposed. The photosensitive drum 102, the charging member 103 and the developing member 105 are constituted as a process cartridge 107, which is integrally mountable and demountable with respect to the printer main assembly 100. Incidentally, it is sufficient for the process cartridge 107 to include at least the photosensitive drum 102.

In the printer main assembly 100, as other constituents, a sheet feeding portion 111 which feeds the sheet S, a transfer nip portion 101 which transfers a toner image onto the sheet S, and a fixing device 121 which fixes the toner image to the sheet S are disposed. In order along a conveyance path of the sheet S, a cassette 112, a sheet feeding roller 113 as a sheet feeding means, a conveyance roller pair 114, a registration roller pair 115, the fixing device 121, a fixing conveyance roller pair 132, a discharging roller pair 134 and a discharge tray 135 are provided. The discharge tray 135 is a tray on which the sheet S, to which the image formation is completed and which is discharged, is stacked. On the cassette 112, the sheet S such as a paper is stacked. To a conveyance path for a case in which a double-side printing is performed to the sheet S, a reversing roller pair 136 and a double-side conveyance roller pair 137 are provided.

### (Operation of the image forming apparatus)

Next, an operation of the image forming apparatus 1 will be described. The photosensitive drum 102, which is rotationally driven by the driving source, is uniformly charged to a predetermined potential and a predetermined polarity by the charging member 103. To the photosensitive drum 102 after the charging, an image exposure based on image information is performed onto a surface thereof by the scanner unit 104, and by electric charge in an exposed portion being removed, an electrostatic latent image (latent image) is formed. The electrostatic latent image is developed by the developing member 105 and visualized as the toner image.

The toner image on the photosensitive drum 102 is transferred to the sheet S by the transfer roller 106. The transfer roller 106 is urged toward the photosensitive drum 102 by an urging member (not shown). By this configuration, the transfer nip portion 101 is formed between the transfer roller 106 and the photosensitive drum 102. In this manner, the transfer roller 106 performs a transfer operation which transfers the toner image on the photosensitive drum 102 (on the image bearing member) to the sheet S in the transfer nip portion 101.

Meanwhile, the sheet S is fed from the cassette 112 by the sheet feeding roller 113. The sheet S is conveyed through the conveyance roller pair 114 and the registration roller pair 115 to the transfer nip portion 101. An unfixed toner image transferred from the photosensitive drum 102 to the sheet S in the transfer nip portion 101 is heated and fixed to the sheet S by the fixing device 121.

The sheet S to which the toner image has been fixed is conveyed, in a case in which a single-side printing is performed, through a path selected by a double-side switching member 131 to the fixing conveyance roller pair 132. In the case in which the double-side printing is performed, the sheet S is conveyed through a path selected by the double-side switching member 131 to the reversing roller pair 136. And after being switched back by the reversing roller pair 136, the sheet S is conveyed again via the double-side conveyance roller pair 137 to the transfer nip portion 101, and an image is formed on a back side thereof. The sheet S, to which image output for a single side or double sides thereof have been completed, is conveyed through a path selected by a discharge switching member 133 to the discharging roller pair 134, and discharged to the discharge tray 135 formed on an upper portion of the printer main assembly 100.

### (Frame configuration of a multi-functional printer)

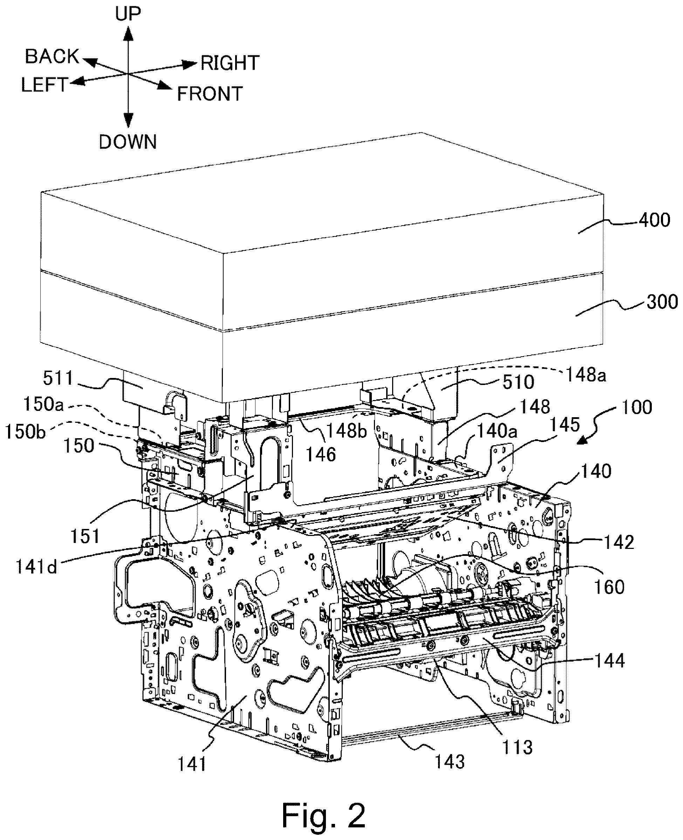

A frame configuration of the image forming apparatus 1, which is a multi-functional printer, will be described using Figure 2. A left and right direction in the description below is defined in a state in which a user is facing a front side of the image forming apparatus 1. Incidentally, when the user is in the state of facing the front side of the image forming apparatus 1, the sheet S to which the image formation is completed is discharged toward the user.

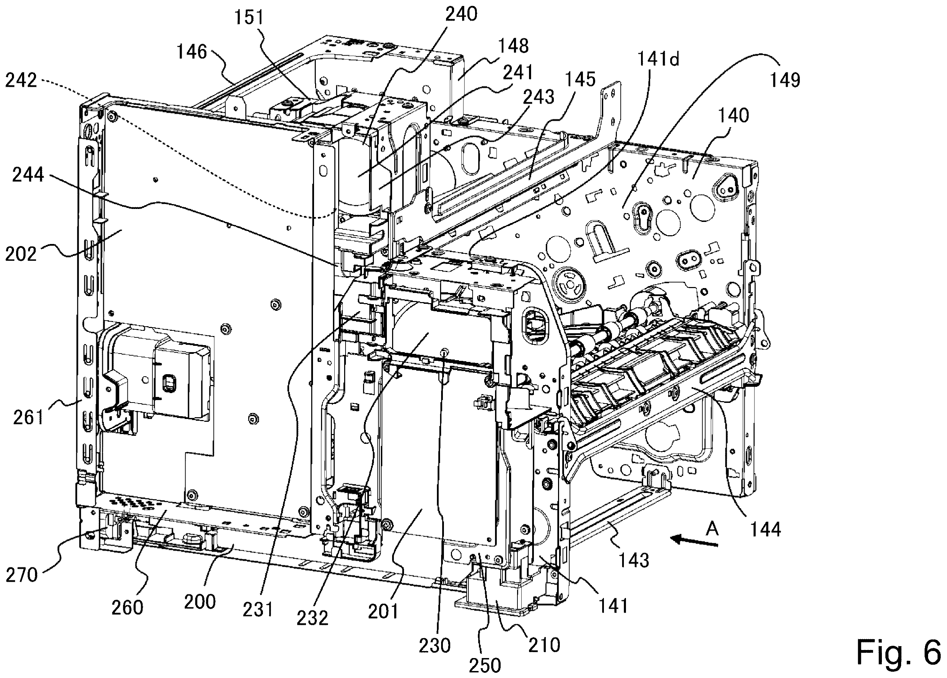

Figure 2 is a perspective view illustrating the frame configuration of the printer main assembly 100. The main assembly frame constituting the printer main assembly 100 includes a left side plate 141 as a first frame and a right side plate 140 as a second frame opposing the left side plate 141. The main assembly frame forms a space 149 (see Figure 6) for accommodating the photosensitive drum 102. Incidentally, the image reading device 300 is disposed above the main assembly frame. Of the process cartridge 107 provided with the photosensitive drum 102, in a rotational axis direction of the photosensitive drum 102, one end side is mounted to the left side plate 141. In addition, of the process cartridge 107, in the rotational axis direction, the other end side opposite to the one end side is mounted to the right side plate 140.

The printer main assembly 100 is constituted by, between the right side plate 140 and the left side plate 141, the sheet feeding roller 113, a core unit 160, a scanner stay 142 and a bottom stay 143 being put. In other words, these units and components are fastened by screws from outsides of both side plates, respectively. To the core unit 160, the conveyance roller pair 114, the registration roller pair 115, the transfer roller 106 and the double-side conveyance roller pair 137 shown in Figure 1 are provided. The scanner stay 142 is provided between the left side plate 141 and the right side plate 140, and is a supporting member which supports the scanner unit 104, and to the scanner stay 142, the scanner unit 104 is disposed. The process cartridge 107 is provided below the scanner stay 142. On the front side of the printer main assembly 100, a front stay 144 is disposed.

A right extension member 148, which is disposed on a top surface 140a of the right side plate 140, and a left extension member 150, which is disposed on a top surface 141d of the left side plate 141, will be described. Here, the top surface 141d of the left side plate 141 is also an upper end of the left side plate 141. As shown in Figure 2, the right extension member 148 is disposed on a back portion of the top surface 140a of the right side plate 140, and the left extension member 150 is disposed on a back portion of the top surface 141d of the left side plate 141. A rear upper stay 146 is fastened to a top surface 148a and a back surface 148b of the right extension member 148 and to a top surface 150a and a back surface 150b of the left extension member 150. The printer main assembly 100 is configured so that, depending on presence or absence of the extension members (148 and 150), the function for the double-side printing and a number of sheets which can be stacked on the discharge tray 135 (see Figure 1) can be changed.

A device supporting member 151 disposed on the top surface 141d of the left side plate 141 will be described. As shown in Figure 2, the device supporting member 151 is disposed between the left extension member 150 and a front upper stay 145. The front upper stay 145 is fastened to the top surface 140a of the right side plate 140 and to the top surface 141d of the left side plate 141. And the device supporting member 151 is fastened to the left extension member 150 and the top surface 141d of the left side plate 141, as well as to the front upper stay 145. To the device supporting member 151 mounted to the left side plate 141, a second fan 240, which will be described below, is mounted, and the device supporting member 151 also functions as a fan supporting portion which supports the second fan 240.

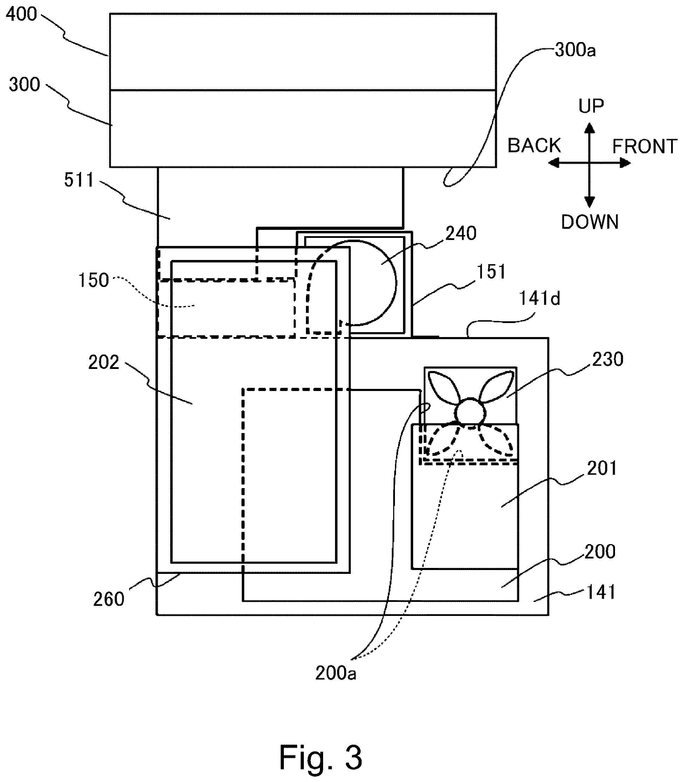

Pillar members 510 and 511 will be described. As shown in Figure 2, the pillar member 510 is disposed on the right extension member 148, and the pillar member 511 is disposed on the left extension member 150 and the device supporting member 151, respectively. On top surfaces of the pillar members 510 and 511, the image reading device 300 and the original conveying device 400 are disposed. The pillar members 510 and 511 are configured to secure a distance between the discharge tray 135 (see Figure 1) and a bottom surface 300a of the image reading device 300 (see Figure 3) so that the sheet S discharged from the printer main assembly 100 can be stacked. Incidentally, the bottom surface 300a of the image reading device 300 is also a lower end of the image reading device 300.

### (Disposition configuration of fans and an electrical component portion of the multi-functional printer)

Next, configurations of fans and an electrical component portion of the image forming apparatus 1 which is a multi-functional printer, which are characteristic configurations of the present Embodiment, will be described using Figure 3 through Figure 6. Figure 3 is an outline view illustrating the configuration of the electrical component portion on the left side of the printer main assembly 100. The electrical component portion of the printer main assembly 100 is constituted by a circuit board 200, a controller board 201, an image data processing board 202, a first fan 230 and the second fan 240. The circuit board 200 is a board (power supply control board) which includes both a low voltage power supply portion which supplies voltage to a driving motor, etc. and a high voltage power supply portion for the image formation. The controller board 201 is a board which performs control of the driving motor and control of the operation of the image formation with receiving various types of sensor signals. The image data processing board 202 is a board which generates image data from data received from a computer or the image reading device 300. In other words, the image data processing board 202 is a board for processing the image data at least read by the image reading device 300. The first fan 230 is a fan which sucks outside air and cools the electrical component portion. The second fan 240 (fan) is a fan which sucks outside air and cools an inside of the apparatus, specifically the process cartridge 107, the scanner unit 104 and a discharging portion.

Disposition of each board and each fan will be described. The circuit board 200 is disposed at a position closest to the left side plate 141. The first fan 230 is disposed at a cutaway portion 200a where a portion of the circuit board 200 is cut away. The controller board 201 is disposed so as to be overlapped, as viewed in a direction crossing the left side plate 141, with the circuit board 200, and be overlapped also with a part of the first fan 230. In other words, the controller board 201 is disposed at a position farther away from the left side plate 141 than the circuit board 200. The image data processing board 202 is also disposed so as to be overlapped with the circuit board 200. In other words, the image data processing board 202 is disposed at a position farther away from the left side plate 141 than the circuit board 200. The image data processing board 202 is held in a board case 260 and mounted to the left side plate 141.

The image data processing board 202 for the multi-functional printer requires a larger area than an image data processing board for a single-functional printer for processing data with larger volume and more complexity. Therefore, the image data processing board 202 and the board case 260, which is a mounting member thereof, are larger than the left side plate 141 in the vertical direction, and are disposed with being extended to a space between the top surface 141d of the left side plate 141 and the image reading device 300. In other words, the image data processing board 202 is mounted so that a part thereof protrudes, in the vertical direction, above the left side plate 141. The second fan 240 is disposed between the top surface 141d of the left side plate 141 and the image reading device 300. As viewed in the rotational axis direction of the photosensitive drum 102, a part of the image data processing board 202 and the board case 260 are disposed so as to be overlapped also with the second fan 240.

### (Mounting of the circuit board)

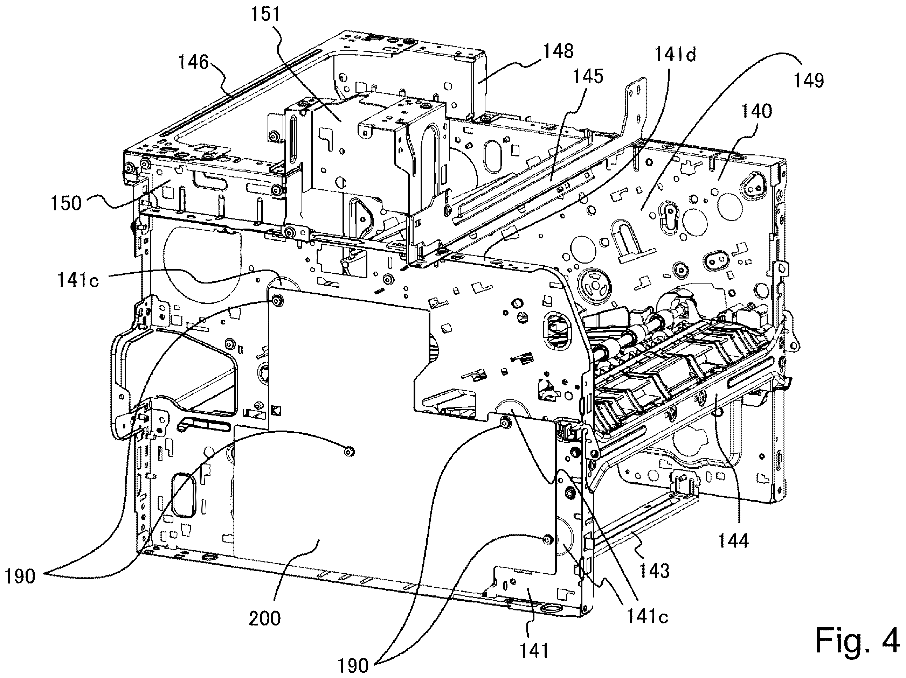

A mounting configuration for each board and each fan will be described. Figure 4 shows a state in which the circuit board 200 is mounted to the left side, specifically to the left side plate 141 of the printer main assembly 100. As shown in Figure 4, the circuit board 200 is disposed on a drawn portion 141c formed in the left side plate 141, and fixed thereto by screws 190. The drawn portion 141c protrudes outward from the left side plate 141, and the circuit board 200 is disposed with keeping a distance from the left side plate 141 by a protruding amount of the drawn portion 141c. The circuit board 200 is configured so as to cover nearly half an area of the left side plate 141.

### (Mounting of a drawer holder and a bundle wire guide)

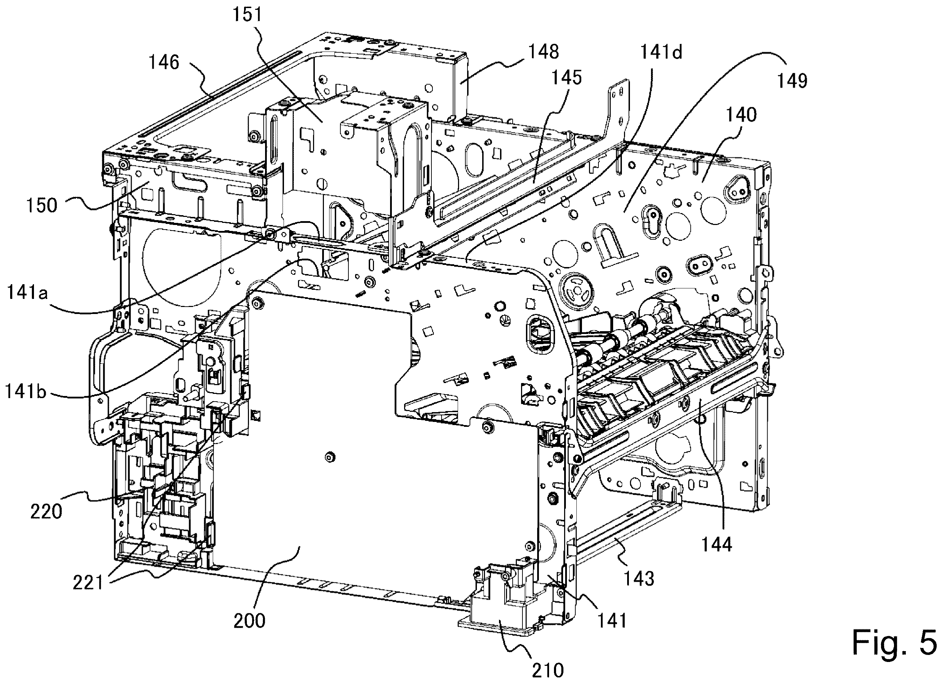

Figure 5 shows a state in which a drawer holder 210 and a bundle wire guide 220 are mounted around the circuit board 200. In the drawer holder 210, a drawer connector for electrically connecting to a sheet feeding option disposed below the printer main assembly 100 is provided. The drawer holder 210 is fixed to the left side plate 141. The bundle wire guide 220 guides a high voltage cable from an inlet 270 (see Figure 6) to the circuit board 200 and a high voltage cable from the circuit board 200 to the fixing device 121 (see Figure 1). To the bundle wire guide 220, a board fixing claw 221 is provided and configured to fix the circuit board 200. The bundle wire guide 220 is fixed to the left side plate 141.

### (Mounting of the controller board, the image data processing board and the first and second fans)

Figure 6 shows a state in which the controller board 201, the image data processing board 202, the first fan 230 and the second fan 240 are mounted. The controller board 201 is disposed with being overlapped with the circuit board 200 in the rotational axis direction of the photosensitive drum 102. The controller board 201 is fixed to a supporting plate 250 with screws. The supporting plate 250 is fixed to the left side plate 141 and the drawer holder 210, and is configured to keep a distance so as not to contact electrical components mounted on the circuit board 200.

The first fan 230 is an axial fan, incorporated in a fan holder 231, and fixed to the supporting plate 250. The first fan 230 is disposed so that while a part thereof is overlapped with the controller board 201 but the other part of the first fan 230 is not overlapped with the controller board 201. The first fan 230 includes an air intake portion 232. The air intake portion 232 is disposed so that a part thereof is not overwrapped with the controller board 201, and is configured so as to be able to suck outside air from this part. In addition, in the fan holder 231, a duct is also formed and configured to deliver cooling air to the circuit board 200 and the image data processing board 202.

The image data processing board 202 is also disposed with being overlapped with the circuit board 200 in the rotational axis direction of the photosensitive drum 102. The image data processing board 202 is disposed inside a space having an approximately box shape formed by the board case 260 and an interface plate 261. In the interface plate 261, a plurality of holes are provided so that a user can insert connectors into a LAN connector, a USB connector, etc. provided on the image data processing board 202.

The board case 260 integrated with the interface plate 261 is fastened to the supporting plate 250, and the interface plate 261 is fastened to a back surface of the left side plate 141. Furthermore, the board case 260 is also fastened to the left extension member 150 and to the device supporting member 151. By this, it becomes possible for the board case 260, the left extension member 150 and the device supporting member 151 to be mounted to the left side plate 141 with keeping rigidity.

The second fan 240 is incorporated into a fan holder 243, is disposed inside the device supporting member 151, and is mounted to the device supporting member 151. The second fan 240 is disposed so that while a part thereof is overlapped with the board case 260 but the other part of the second fan 240 is not overlapped with the board case 260. The second fan 240 includes an air intake portion 241 and an exhaust opening 242. The air intake portion 241 is disposed so that a part thereof is not overwrapped with the board case 260, and is configured so as to be able to suck outside air from this part.

### (Vicinity of the second fan)

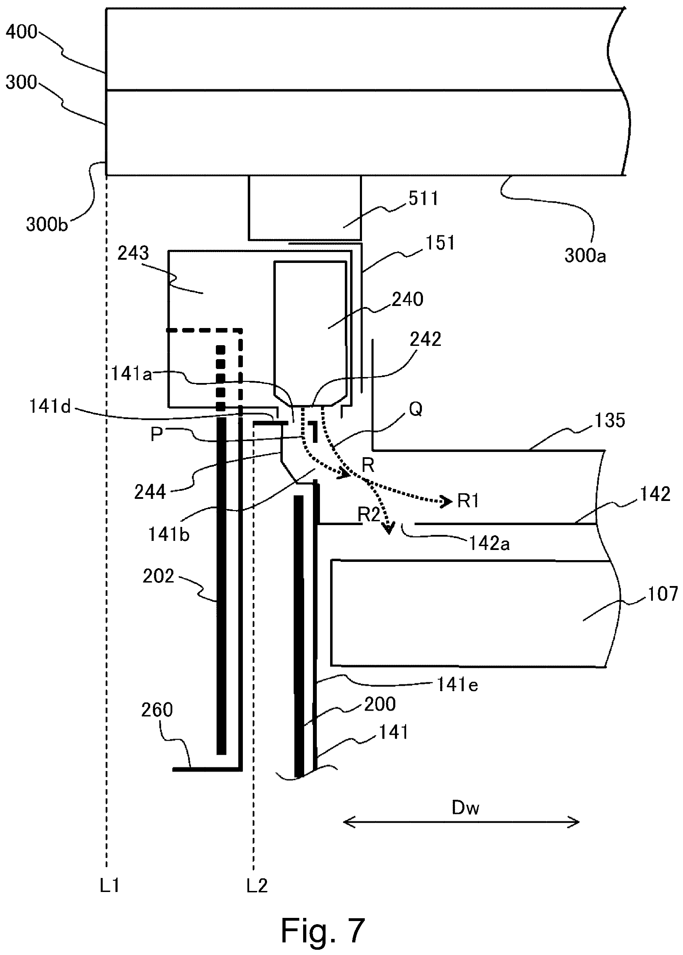

Figure 7 is an outline cross-sectional view, as viewed in a direction of an arrow A in Figure 6, of a part at which the second fan 240 is disposed. Incidentally, in the description below, a sheet widthwise direction Dw is a direction perpendicular to a conveyance direction of the sheet S, and is the left and right direction. In addition, as for a space sectioned by the left side plate 141, the right side plate 140 side (a second side plate side) is defined as an inside of a apparatus (inside), and the opposite side to the inside of the apparatus is defined as an outside thereof. This can also be said that the space 149 side (space side) in which the photosensitive drum 102 is accommodated, with respect to the left side plate 141, is defined as an inside of the left side plate 141, and the opposite side to the space 149 side in which the photosensitive drum 102 is accommodated, with respect to the left side plate 141, is defined as an outside of the left side plate 141.

The second fan 240 is a sirocco fan, is disposed on the top surface 141d side of the left side plate 141, and is disposed between the board case 260 and the discharge tray 135. In other words, it can also be said that the second fan 240 is disposed, in the rotational axis direction of the photosensitive drum 102, between the image data processing board 202 and the discharge tray 135. Above the device supporting member 151 inside which the second fan 240 is disposed, the pillar member 511 is disposed. And on the pillar member 511, the image reading device 300 and the original conveying device 400 are disposed. The left side plate 141 includes a side surface 141e as a first surface opposing the right side plate 140 and the top surface 141d (upper surface) formed at the upper end of the side surface 141e. To the side surface 141e, a first opening 141b as a second through hole is provided, and to the top surface 141d, a second opening 141a as a first through hole is provided.

In other words, the top surface 141d (upper end) of the left side plate 141 is in contact with the device supporting member 151 and includes a part on which the device supporting member 151 is mounted. In the top surface 141d, the second opening 141a as a through hole penetrating from above to below of the plate is formed. In the rotational axis direction of the photosensitive drum 102, at least a part of the second fan 240 and the second opening 141a are in the same position. In addition, in a direction (front and back direction) perpendicular to both the rotational axis direction and the vertical direction, at least a part of the second fan 240 and the second opening 141a are in the same position (see Figure 7).

In addition, below the exhaust opening 242 of the second fan 240, a duct 244 is provided. The duct 244 connects the first opening 141b and the second opening 141a. More specifically, of the duct 244, one end portion is connected to the second opening 141a in the top surface 141d, and the other end portion is connected to the first opening 141b in the side surface 141e.

In the sheet widthwise direction Dw, the exhaust opening 242 of the second fan 240 is disposed so as to straddle the side surface 141e of the left side plate 141. By this, the cooling air blown out from the exhaust opening 242 is delivered with being divided to the inside and the outside of the apparatus. More specifically, in the sheet widthwise direction Dw, the exhaust opening 242 of the second fan 240 is disposed so that a part of the exhausted air flows the inside of the product and the remaining part of the air flows the outside. In the sheet widthwise direction Dw, the air flowing outside of the apparatus from the exhaust opening 242 is defined as a cooling air P, and the air flowing the inside of the apparatus is defined as a cooling air Q.

It is configured so that the cooling air P passes through the second opening 141a provided in the top surface 141d of the left side plate 141, is guided by the duct 244, and passes through the first opening 141b provided in the side surface 141e of the left side plate 141. And the cooling air P is merged with the cooling air Q delivered to the inside of the product from the exhaust opening 242. The merged cooling air is defined as a merged colling air R. The merged cooling air R can cool the scanner unit 104 (see Figure 1) disposed on the scanner stay 142 (R1), and can also cool the process cartridge 107, etc. by passing through a third opening 142a provided in the scanner stay 142 (R2). The third opening 142a corresponds to a third through hole.

In addition, an end portion of the image reading device 300 in the rotational axis direction of the photosensitive drum 102 (sheet widthwise direction Dw) is defined as a device end portion 300b (unit end portion). In this case, as shown in Figure 7, in the rotational axis direction (sheet widthwise direction Dw), the image data processing board 202 is between the device end portion 300b and the left side plate 141. In other words, as shown in Figure 7, the image data processing board 202 is between a broken line L1 and a broken line L2.

As described above, the present Embodiment has been described. In the present Embodiment, the image data processing board 202 is positioned on the outside of the left side plate 141, and a part of the image data processing board 202 is above the upper end (top surface 141d) of the left side plate 141 and below the lower end (bottom surface 300a) of the image reading device 300. In addition, at least a part of the second fan 240 is above the upper end (top surface 141d) of the left side plate 141 and below the lower end (bottom surface 300a) of the image reading device 300. In addition, the second fan 240 is disposed, in the widthwise direction perpendicular to the conveyance direction of the sheet S, between the image data processing board 202 and the discharge tray 135.

The exhaust opening 242 of the second fan 240 is positioned, in the widthwise direction (rotational axis direction of the photosensitive drum 102) perpendicular to the conveyance direction of the sheet S, so as to straddle the left side plate 141. In other words, a flow passage of the air exhausted from the exhaust opening 242 is branched into the inside and the outside of the left side plate 141. The air flowing in a flow passage branched into the outside passes through the second opening 141a and passes through the first opening 141b. The air which has passed through the second opening 141a and passed through the first opening 141b is merged with the air which has passed through a flow passage branched into the inside of the left side plate 141. A part of the air which is merged cools the scanner unit 104, and the remaining part of the air passes through the third opening 142a and cools the process cartridge 107.

According to the present Embodiment, even in the case of the image data processing board 202 for a multi-functional printer which performs data processing with large volume and complexity, the image data processing board 202 and the board case 260 are disposed with being extended to a space between the top surface 141d of the left side plate 141 and the image reading device 300. Furthermore, the second fan 240 is disposed between the top surface 141d of the left side plate 141 and the image reading device 300, and is disposed between the board case 260 and the discharge tray 135. By these, it becomes possible to suppress an increase in a size of the product without increasing cost along with an increase in a size of the side plate.

Incidentally, in the present Embodiment, an example of a sirocco fan as the second fan 240 is described, however, it may be configured with an axial fan. In addition, an example in which the circuit board 200, the controller board 201, the image data processing board 202, the first fan 230 and the second fan 240 are disposed on the left side plate 141 side of the printer main assembly 100 is described, however, they may be disposed on the right side plate 140 side. In other words, it may be configured as the right side plate 140 corresponds to the first side plate and the left side plate 141 corresponds to the second side plate. In addition, the configuration in which the cassette 112 is mounted and demounted in the same direction as the conveyance direction of the sheet S is described, however, it may be a configuration in which the cassette 112 is mounted and demounted in a direction perpendicular to the conveyance direction.

As described above, according to the present Embodiment, it becomes possible to downsize the image forming apparatus.

Disclosure of the present Embodiments includes the following constitutions.

### (Constitution 1)

An image forming apparatus comprising:
a photosensitive drum;
a main assembly frame including a first frame and a second frame opposing the first frame, and configured to form a space for accommodating the photosensitive drum;
an image reading unit provided above the main assembly frame;
an image data processing board configured to process at least an image data read by the image reading unit; and
a fan configured to cool inside the image forming apparatus,
wherein a side of the space to the first frame is an inside of the first frame and a side opposite to the side of the space to the first frame is an outside of the first frame,
wherein the image data processing board is positioned at the outside of the first frame,
wherein a part of the image data processing board is above an upper end of the first frame and below a lower end of the image reading unit, and
wherein at least a part of the fan is above the upper end of the first frame and below the lower end of the image reading unit.

### (Constitution 2)

The image forming apparatus according to Constitution 1, further comprising a fan supporting portion to which the fan is mounted and configured to support the fan,
wherein the fan supporting portion is mounted to the first frame.

### (Constitution 3)

The image forming apparatus according to Constitution 1 or Constitution 2, further comprising a cartridge provided with the photosensitive drum,
wherein in a rotational axis direction of the photosensitive drum, one end side of the cartridge is mounted to the first frame, and
wherein in the rotational axis direction, the other end side opposite to the one end side of the cartridge is mounted to the second frame.

### (Constitution 4)

The image forming apparatus according to any one of Constitution 1 to Constitution 3, wherein an end portion of the image reading unit in a rotational axis direction of the photosensitive drum is a unit end portion, and
wherein in the rotational axis direction, the image data processing board is between the unit end portion and the first frame.

### (Constitution 5)

The image forming apparatus according to any one of Constitution 1 to Constitution 4, wherein as viewed in a rotational axis direction of the photosensitive drum, the part of the image data processing board is overwrapped with the fan.

### (Constitution 6)

The image forming apparatus according to Constitution 5, further comprising a tray on which a sheet to which image formation is finished is discharged,
wherein in the rotational axis direction, the fan is disposed between the image data processing board and the tray.

### (Constitution 7)

The image forming apparatus according to Constitution 6, wherein in the rotational axis direction, an exhaust opening of the fan is positioned so as to straddle the first frame.

### (Constitution 8)

The image forming apparatus according to Constitution 2, wherein the upper end of the first frame is in contact with the fan supporting portion and includes an upper surface on which the fan supporting portion is mounted,
wherein in the upper surface, a through hole penetrating from above to below of the first frame is formed
wherein in a rotational axis direction of the photosensitive drum, at least a part of the fan and the through hole is in a same position.
wherein in a direction perpendicular to both the rotational axis direction and a vertical direction, at least a part of the fan and the through hole is in the same position.

### (Constitution 9)

The image forming apparatus according to Constitution 8, wherein when the through hole is a first through hole,
the first frame includes a side surface opposing the second frame,
in the side surface, a second through hole penetrating from one side to the other side of the first frame in the rotational axis direction is formed, and
an air flowing in a flow passage branched into the outside passes through the first through hole and then passes through the second through hole.

### (Constitution 10)

The image forming apparatus according to Constitution 9, further comprising:
a cartridge provided with the photosensitive drum;
an exposure device configured to form an electrostatic latent image on the photosensitive drum; and
a supporting member provided between the first frame and the second frame and configured to support the exposure device,
wherein the cartridge is provided below the supporting member,
wherein in the supporting member, a third through hole penetrating from above to below thereof is formed, and
wherein a part of the air which is merged cools the exposure device and a remaining part of the air passes through the third through hole and cools the cartridge.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An image forming apparatus comprising:
a photosensitive drum;
a main assembly frame including a first frame and a second frame opposing the first frame, and configured to form a space for accommodating the photosensitive drum;
an image reading unit provided above the main assembly frame;
an image data processing board configured to process at least an image data read by the image reading unit; and
a fan configured to cool inside the image forming apparatus,
wherein a side of the space to the first frame is an inside of the first frame and a side opposite to the side of the space to the first frame is an outside of the first frame,
wherein the image data processing board is positioned at the outside of the first frame,
wherein a part of the image data processing board is above an upper end of the first frame and below a lower end of the image reading unit, and
wherein at least a part of the fan is above the upper end of the first frame and below the lower end of the image reading unit.

2. The image forming apparatus according to Claim 1, further comprising a fan supporting portion to which the fan is mounted and configured to support the fan,
wherein the fan supporting portion is mounted to the first frame.

3. The image forming apparatus according to Claim 1, further comprising a cartridge provided with the photosensitive drum,
wherein in a rotational axis direction of the photosensitive drum, one end side of the cartridge is mounted to the first frame, and
wherein in the rotational axis direction, the other end side opposite to the one end side of the cartridge is mounted to the second frame.

4. The image forming apparatus according to Claim 1, wherein an end portion of the image reading unit in a rotational axis direction of the photosensitive drum is a unit end portion, and
wherein in the rotational axis direction, the image data processing board is between the unit end portion and the first frame.

5. The image forming apparatus according to Claim 1, wherein as viewed in a rotational axis direction of the photosensitive drum, the part of the image data processing board is overwrapped with the fan.

6. The image forming apparatus according to Claim 5, further comprising a tray on which a sheet to which image formation is finished is discharged,
wherein in the rotational axis direction, the fan is disposed between the image data processing board and the tray.

7. The image forming apparatus according to Claim 6, wherein in the rotational axis direction, an exhaust opening of the fan is positioned so as to straddle the first frame.

8. The image forming apparatus according to Claim 2, wherein the upper end of the first frame is in contact with the fan supporting portion and includes an upper surface on which the fan supporting portion is mounted,
wherein in the upper surface, a through hole penetrating from above to below of the first frame is formed
wherein in a rotational axis direction of the photosensitive drum, at least a part of the fan and the through hole is in a same position.
wherein in a direction perpendicular to both the rotational axis direction and a vertical direction, at least a part of the fan and the through hole is in the same position.

9. The image forming apparatus according to Claim 8, wherein when the through hole is a first through hole,
the first frame includes a side surface opposing the second frame,
in the side surface, a second through hole penetrating from one side to the other side of the first frame in the rotational axis direction is formed, and
an air flowing in a flow passage branched into the outside passes through the first through hole and then passes through the second through hole.

10. The image forming apparatus according to Claim 9, further comprising:
a cartridge provided with the photosensitive drum;
an exposure device configured to form an electrostatic latent image on the photosensitive drum; and
a supporting member provided between the first frame and the second frame and configured to support the exposure device,
wherein the cartridge is provided below the supporting member,
wherein in the supporting member, a third through hole penetrating from above to below thereof is formed, and
wherein a part of the air which is merged cools the exposure device and a remaining part of the air passes through the third through hole and cools the cartridge.
